# EUROPÄISCHE PATENTANMELDUNG

(11) **EP 3 450 214 A1**
(43) Veröffentlichungstag der Anmeldung: **06.03.2019**
(21) Anmeldenummer: 18175660.2
(22) Anmeldetag: 04.06.2018
(51) Int. Cl.: B60C 11/12, B60C 11/03, B60C 11/11

(54) **LAUFSTREIFENPROFIL EINES FAHRZEUGREIFENS**

(30) Priorität: 04.09.2017 DE 102017215426
(71) Anmelder: Continental Reifen Deutschland GmbH, 30165 Hannover (DE)
(72) Erfinder: Behr, Ulrich, 30167 Hannover (DE)
(74) Vertreter: Finger, Karsten

(57) **Zusammenfassung**

Laufstreifenprofil eines Fahrzeugreifens mit durch Rillen (3,4,5) voneinander getrennten Profilelementen (6,8), die nach radial außen von einer radial äußeren Oberfläche (11) begrenzt werden, und mit Feineinschnitten (10,10',10",10''',10^{Iv},10^{v}), die in der radial äußeren Oberfläche (11) in Profilelementen (6,8) ausgebildet sind und jeweils mit wenigstens einem Erstreckungsende in eine das Profilelement (6,8) begrenzende Rille (4,5) münden, wobei Feineinschnitte (10,10',10",10''',10^{Iv},10^{v}) in Profilelementen (6,8) ausgebildet sind, die längs ihrer Erstreckung in der radial äußeren Oberfläche (11) über ihren größten Abschnitt (12) ihrer Erstreckungslänge mit einer im Wesentlichen konstanten Feineinschnittsdicke dₘᵢₙ und in einem kürzeren, zwischen dem größten Abschnitt (12) und der Rille (4,5) erstreckten Randabschnitt (13) mit einer von der Feineinschnittsdicke dₘᵢₙ in der Position des Übergangs zwischen größtem Abschnitt (12) und Randabschnitt (13) bis zur Rille (4,5) hin zunehmenden Feineinschnittsdicke d ausgebildet sind.

## Beschreibung

Die Erfindung betrifft ein Laufstreifenprofil eines Fahrzeugreifens - insbesondere eines PKW-Fahrzeugreifens - mit durch Rillen voneinander getrennten Profilelementen, die nach radial außen von einer radial äußeren Oberfläche begrenzt werden, und mit Feineinschnitten, die in der radial äußeren Oberfläche in Profilelementen ausgebildet sind und jeweils mit wenigstens einem Erstreckungsende in eine das Profilelement begrenzende Rille münden.

Derartige Fahrzeugluftreifen sind bekannt.

Es ist bekannt, Fahrzeugluftreifen zur Verbesserung der Wintertauglichkeit mit Feineinschnitten in den Profilblockelementen von Profilblockreihen auszubilden. Die Feineinschnitte sind hierzu mit ihrer Haupterstreckungsrichtung üblicherweise in axialer Richtung A des Fahrzeugluftreifens ausgerichtet und münden in die die Profilblockelemente begrenzenden Umfangsrillen. Die Feineinschnitte sind dabei längs ihrer gesamten Erstreckung mit einer in der radial äußeren Oberfläche gemessenen, im Wesentlichen konstanten Feineinschnittsdicke ausgebildet. Die Feineinschnitte ermöglichen beim Abrollen auf schneebedeckter Straßenoberfläche die Sicherung zusätzlicher Schneegriffkanten sowie durch Öffnen und Schließen des Feineinschnitts beim Abrollen die Aufnahme und Verdichtung von Schnee und dadurch eine Verbesserung der Schnee-Schnee-Reibung. Derartige Feineinschnitte sind dabei in der radial äußeren Oberfläche im Wesentlichen üblicherweise geradlinig erstreckt ausgebildet. Es ist darüber hinaus bekannt, die Feineinschnitte in der radial äußeren Oberfläche mit einem längs ihrer Haupterstreckungsrichtung erstreckten wellenförmigen Verlauf auszubilden, wodurch die wirksame Griffkantenlänge noch verlängert ausgebildet werden kann und zusätzliche wirksame Griffkantenlänge zur Übertragung von Seitenkräften auf Schnee ermöglicht wird.

Die bekannten Feineinschnitte sind üblicherweise mit einer längs ihrer gesamten Erstreckung im Wesentlichen gleichbleibenden konstanten Feineinschnittsdicke von 0,4mm bis 0,8 mm bei Pkw-Fahrzeugluftreifen ausgebildet ist. Die schmale Ausbildung der Feineinschnitte ermöglicht dabei die erforderliche Stützwirkung zwischen den beiden Feineinschnittswänden beim Abrollen auf der Straße, so dass im Fahrzeugluftreifen mit seinen mit Feineinschnitten ausgebildeten Profilblockelementen noch eine ausreichende Steifigkeit der Profilblockelemente zur Kraftübertragung trotz der Aufweichung durch die Feineinschnitte ermöglicht wird. Der Wasserabfluss aus dem durch die Rillen begrenzten Profilblockelementen und die Wasseraufnahme erfolgt im Wesentlichen durch die die Profilblockelemente begrenzenden Rillen. Der durch die radial äußere Oberfläche des Profilblockelementes begrenzte Flächenabschnitt wird aufgrund der schmalen Ausbildung der Feineinschnitte nur begrenzt über die Feineinschnitte entwässert. Die Ausbildung von Feineinschnitten mit deutlich größerer Feineinschnittsdicke innerhalb des Profilblockelementes würde zwar zusätzliche Aufnahme von Wasser und eine verbesserte Ableitung aus dem Profilblockelement in die Umfangsrille hin ermöglichen. Allerdings würde die Ausbildung der bekannten Feineinschnitte mit ihrer konstant ausgebildeten Feineinschnittsdicke über die gesamte Erstreckung des Feineinschnitts bei dieser großen Feineinschnittsdicke zur deutlichen Reduktion der Profilblocksteifigkeit und somit zur Aufweichung des Profilblockelementes beitragen und somit die Kraftübertragung auf trockener und nasser Straße verschlechtern. Darüber hinaus wird durch diese Aufweichung mit dicken Feineinschnitten das Geräuschbild negativ beeinflusst und bei zu dicker Ausbildung auch Abrieb zusätzlich negativ beeinflusst.

Der Erfindung liegt die Aufgabe zugrunde, ein derartiges Laufstreifenprofil mit durch Rillen begrenzten Profilelementen mit Feineinschnitten bereitzustellen, bei dem unter Nutzung der Vorteile der herkömmlichen Feineinschnitte hinsichtlich gutem Schneegriff bei guter Steifigkeit und geringem Geräuschbild eine Verbesserung von Nassgriff- und Schneegriffeigenschaften ermöglicht werden.

Die Aufgabe wird erfindungsgemäß durch die Ausbildung eines Laufstreifenprofils eines Fahrzeugreifens - insbesondere eines PKW-Fahrzeugreifens - mit durch Rillen voneinander getrennten Profilelementen, die nach radial außen von einer radial äußeren Oberfläche begrenzt werden, und mit Feineinschnitten, die in der radial äußeren Oberfläche in Profilelementen ausgebildet sind und jeweils mit wenigstens einem Erstreckungsende in eine das Profilelement begrenzende Rille münden, gemäß den Merkmalen von Anspruch 1 gelöst, bei dem Feineinschnitte in Profilelementen ausgebildet sind, die längs ihrer Erstreckung in der radial äußeren Oberfläche über ihren größten Abschnitt ihrer Erstreckungslänge mit einer im Wesentlichen konstanten Feineinschnittsdicke dₘᵢₙ und in einem kürzeren, zwischen dem größten Abschnitt und der Rille erstreckten Randabschnitt mit einer von der Feineinschnittsdicke dₘᵢₙ in der Position des Übergangs zwischen größtem Abschnitt und Randabschnitt bis zur Rille hin - insbesondere stetig - zunehmenden Feineinschnittsdicke d ausgebildet sind.

Durch diese Ausbildung wird ermöglicht, dass die Profilelemente weiterhin mit den gewünschten Feineinschnitten ausgebildet sein können, die beim Abrollen auf Schnee und Matsch die gewünschte Kantenwirkung zur Schneegriffübertragung bereitstellen und dabei auch beim Abrollen ein Öffnen und Schließen des Feineinschnittes zum Einschließen und Verdichten des Schnees und somit zur Erzielung einer guten Schnee-Schnee-Reibung ermöglichen. Die Ausbildung mit konstanter Dicke im größten Erstreckungsabschnitt des Feineinschnittes ermöglicht dabei weiterhin die gewünschte Stützwirkung der Feineinschnittswände beim Abrollen und die gewünschte Versteifung des Profilelementes, so dass gute Trockengriff- und Nassgriffeigenschaften weiterhin gut umgesetzt werden können und dabei auch ein gutes Geräuschbild und Abriebverhalten einfach umgesetzt werden können. Die zunehmende Erweiterung der Feineinschnittsdicke in dem kürzeren Randerstreckungsabschnitt des Feineinschnittes bis zur Rille hin ermöglicht dabei zusätzlich ein verbessertes Eindringen von Schnee aus der Rille in den Feineinschnitt hinein und aufgrund der hierdurch auch bedingten, von der Rille ausgehenden Verjüngung des Feineinschnittes im Randbereich eine zusätzliche Verdichtung des eindringenden Schnees, wodurch die Schnee-Schnee-Reibung im Randerstreckungsbereich zur Umfangsrille hin und somit die Schneegriffwirkung weiter verbessert werden kann. Darüber hinaus kann aufgrund der zur Umfangsrille hin zunehmenden Dicke des Feineinschnitts im Randerstreckungsabschnitt die Wasseraufnahme aus der radial äußeren Oberfläche des Profilelemenentes und die Entwässerung aus dem Erstreckungsbereich des Feineinschnittes und aus der radial äußeren Oberfläche des Profilelementes und somit die Nassgriffeigenschaften verbessert werden. Somit können durch diese Ausbildung mit einfachen Mitteln unter Nutzung der gewünschten Vorteile der bekannten Feineinschnitte in Profilelementen Schneegriff- und Nassgriffeigenschaften weiter verbessert werden.

Besonders vorteilhaft für eine schnelle Evakuierung von Wasser ist die Ausbildung eines Fahrzeugreifens gemäß den Merkmalen von Anspruch 2, wobei die Rille, in die der Feineinschnitt an seinem Randabschnitt mündet, eine Umfangsrille ist.

Besonders vorteilhaft ist die Ausbildung eines Fahrzeugreifens gemäß den Merkmalen von Anspruch 3, wobei der Feineinschnitt in der radial äußeren Oberfläche mit einer Haupterstreckungsrichtung ausgebildet ist, deren Richtungskomponente in axialer Richtung A des Fahrzeugluftreifens größer ist als die in Umfangsrichtung U. Hierdurch können in einfacher Weise besonders wirkungsvolle quer verlaufende Kanten bereitgestellt und somit gutes Schnee- und Nassbremsen weiter begünstigt werden.

Besonders vorteilhaft ist die Ausbildung eines Fahrzeugreifens gemäß den Merkmalen von Anspruch 4, wobei der Feineinschnitt in der radial äußeren Oberfläche längs der Haupterstreckungsrichtung des Feineinschnitts gemessenen Erstreckungslänge a des Randabschnittes mit 2mm ≤ a ≤ (1/3)b ausgebildet ist, wobei b die in der radial äußeren Oberfläche längs der Haupterstreckungsrichtung des Feineinschnitts gemessene Erstreckungslänge des Feineinschnitts ist. Hierdurch kann in einfacher Weise die verbesserte Entwässerung und Schneeverdichtung und optimierte Griffkanten des Feineinschnitts mit großer Stützwirkung bei einfacher Fertigbarkeit umgesetzt werden.

Besonders vorteilhaft ist die Ausbildung eines Fahrzeugreifens gemäß den Merkmalen von Anspruch 5, wobei die Erstreckungslänge b des Feineinschnitts mit 6mm ≤ b ≤ L ausgebildet ist, wobei L die in der radial äußeren Oberfläche des Profilelementes längs der Haupterstreckungsrichtung des Feineinschnitts in der Position des Feineinschnitts gemessene Erstreckungslänge des Profilelementes ist. Hierdurch kann in einfacher Weise eine gute Wirksamkeit des Feineinschnitts zuverlässig umgesetzt werden.

Besonders vorteilhaft ist die Ausbildung eines Fahrzeugreifens gemäß den Merkmalen von Anspruch 6, wobei der Feineinschnitt zumindest in der radial äußeren Oberfläche im Randabschnitt mit einer ausgehend von der Position des Übergangs zwischen größtem Abschnitt bis zur Rille hin - insbesondere symmetrisch - trichterförmig erweitert ausgebildet ist. Hierdurch kann in einfacher Weise eine besonders gute Entwässerung des Feineinschnitts umgesetzt werden.

Besonders vorteilhaft ist die Ausbildung eines Fahrzeugreifens gemäß den Merkmalen von Anspruch 7, wobei die Feineinschnittsdicke dₘᵢₙ im größten Abschnitt mit 0,4mm≤dₘᵢₙ ≤1,2mm - insbesondere mit 0,6mm≤ dₘᵢₙ ≤0,8mm - ausgebildet ist. Die Ausbildung ermöglicht in einfacher Weise die zuverlässige Bereitstellung wirksamer Griffkanten bei ausreichendem Negativvolumen des Feineinschnitts.

Besonders vorteilhaft ist die Ausbildung eines Fahrzeugreifens gemäß den Merkmalen von Anspruch 8, wobei der Feineinschnitt im Randabschnitt an der Einmündung in die Rille mit ihrer maximalen Feineinschnittsdicke dₘₐₓ ausgebildet ist mit 2dₘᵢₙ ≤ dₘₐₓ ≤ 3dₘᵢₙ. Durch diese Ausbildung kann die durch die Erweiterung ermöglichte Aufnahme und Verdichtung von Schnee und die verbesserte Wasserableitung besonders wirksam umgesetzt werden unter Sicherstellung einer großen wirksamen Gummimaterialoberfläche auch im Randbereich, wodurch eine maximale Kraftübertragung sichergestellt werden kann.

Besonders vorteilhaft ist die Ausbildung eines Fahrzeugreifens gemäß den Merkmalen von Anspruch 9, wobei der Feineinschnitt an beiden Erstreckungsenden jeweils mit einem derartigen kürzeren, zwischen dem größten Abschnitt und jeweils einer Rille erstreckten Randabschnitt mit einer von der Feineinschnittsdicke dₘᵢₙ in der Position des Übergangs zwischen größtem Abschnitt und Randabschnitt bis zur Rille hin - insbesondere stetig - zunehmenden Feineinschnittsdicke d ausgebildet ist. Hierdurch kann die Entwässerung und die Schneeverdichtung weiter verbessert werden. Darüber hinaus kann das zur Ausformung des Feineinschnitts in der Reifenvulkanisierform eingesetzte Lamellenblech hierdurch dauerhaltbarer in der Form positioniert werden, wodurch ein vorzeitiges Ausbrechen des Lamellenbleches verhindert wird.

Besonders vorteilhaft ist die Ausbildung eines Fahrzeugreifens gemäß den Merkmalen von Anspruch 10, wobei das Profilelement ein Profilblockelement einer Profilblockreihe ist.

Besonders vorteilhaft ist die Ausbildung eines Fahrzeugreifens gemäß den Merkmalen von Anspruch 11, wobei das Profilelement Teil eines Schulterprofilbandes - insbesondere einer Schulterprofilblockreihe - ist. Die Ausbildung ermöglicht dabei eine Evakuierung von Wasser und Schnee aus dem Laufstreifenprofil bei Bedarf, auch außerhalb der Bodenaufstandsfläche.

Die Erfindung wird im Folgenden an Hand der in den Figuren 1 bis 3 dargestellten Ausführungsbeispiele näher erläutert. Hierin zeigen
- Fig.1: einen Abschnitt eines Laufstreifenprofils eines Pkw-Fahrzeugluftreifens in Draufsicht,
- Fig.2: Laufstreifenprofil des Fahrzeugluftreifens von Fig.1 in Schnittdarstellung gemäß Schnitt II-II von Fig.1 und
- Fig.3: einen Abschnitt des Laufstreifenprofils von Fig.1 in perspektivischer Darstellung.

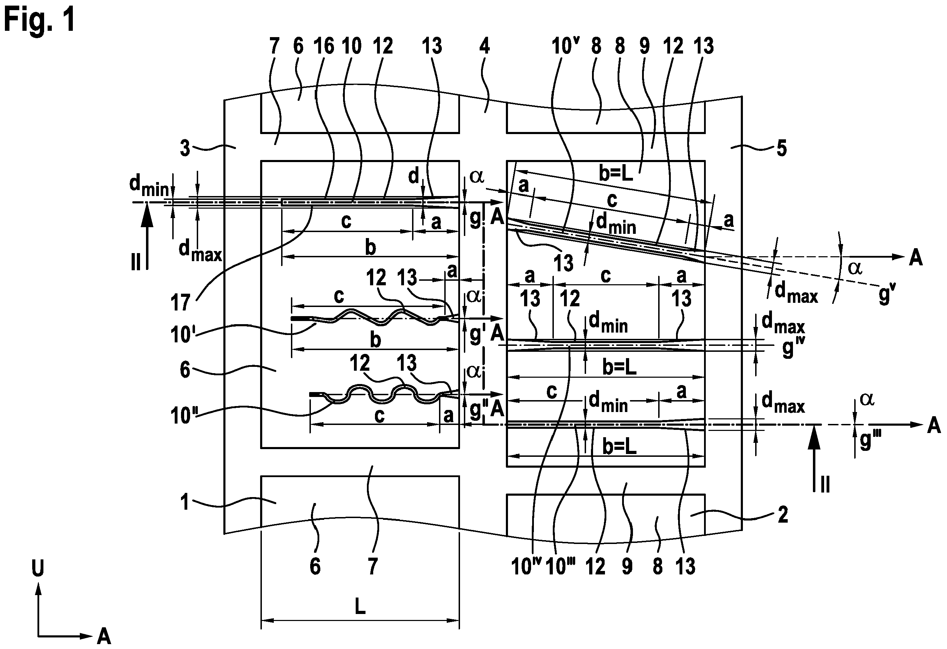

Die Fig. 1 bis 3 zeigen einen Abschnitt eines Laufstreifenprofils des Fahrzeugluftreifens eines Personenkraftwagens (Pkw) mit Wintereignung, bei dem mehrere über den Umfang des Fahrzeugluftreifens erstreckte und in axialer Richtung A des Fahrzeugluftreifens nebeneinander angeordnete Profilblockreihen 1 und 2 ausgebildet sind. Die Profilblockreihe 1 ist in axialer Richtung A zur einen Seite hin durch eine über den Umfang des Fahrzeugluftreifens erstreckte und in Umfangsrichtung U ausgerichtete Umfangsrille 3 bekannter Art und in axialer Richtung A zur Profilblockreihe 2 hin durch eine über den gesamten Umfang des Fahrzeugluftreifens erstreckte, in Umfangsrichtung U ausgerichtete Umfangsrille 4 bekannter Art begrenzt. Die Profilblockreihe 2 ist in axialer Richtung A auf ihrer zur Profilblockreihe 1 hin ausgebildeten Seite durch die Umfangsrille 4 axial begrenzt und in axialer Richtung A zur anderen Seite hin durch eine über den gesamten Umfang des Fahrzeugluftreifens erstreckte und in Umfangsrichtung U ausgerichtete Umfangsrille 5 begrenzt. Die Profilblockreihe 1 ist in bekannter Weise aus über den Umfang des Fahrzeugluftreifens verteilten und in Umfangsrichtung U hintereinander angeordneten und jeweils durch Querrillen 7 voneinander getrennten Profilblockelementen 6 ausgebildet. In analoger Weise ist die Profilblockreihe 2 aus über den Umfang des Fahrzeugluftreifens verteilten und in Umfangsrichtung U hintereinander angeordneten und jeweils durch Querrillen 9 voneinander getrennten Profilblockelementen 8 bekannter Art ausgebildet.

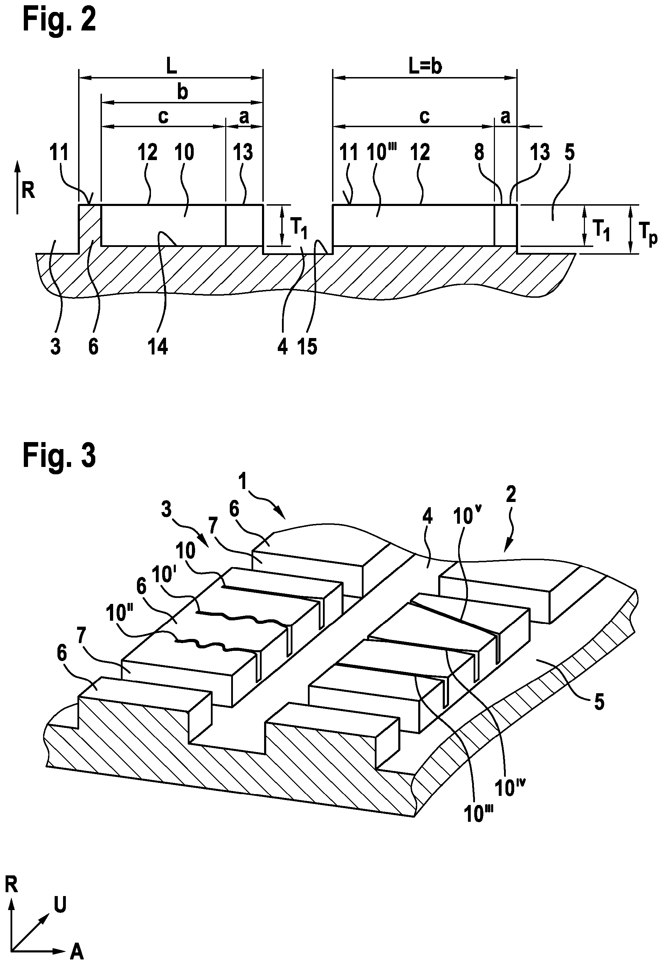

Die Querrillen 7 erstrecken sich dabei in axialer Richtung A des Fahrzeugluftreifens ausgehend von der Umfangsrille 3 durch die Profilblockreihe 1 hindurch bis zur Umfangsrille 4. Die Querrillen 9 erstrecken sich in axialer Richtung A des Fahrzeugluftreifens ausgehend von der Umfangsrille 4 in axialer Richtung A durch die Profilblockreihe 2 hindurch bis zur Umfangsrille 5. Die Profilblockelemente 6 der Umfangsrille 1 sowie die Profilblockelemente 8 der Profilblockreihe 2 sind - wie in Fig.2 und Fig.3 dargestellt - in radialer Richtung R des Fahrzeugluftreifens nach außen hin durch eine innerhalb der Bodenaufstandsbreite des Fahrzeugluftreifens die Bodenkontaktfläche bildende radial äußere Oberfläche 11 begrenzt. Die Umfangsrillen 3, 4 und 5 sowie die Querrillen 7 und 9 sind in radialer Richtung R des Fahrzeugluftreifens nach innen hin in bekannter Weise durch einen Rillengrund begrenzt. Wie in Fig.2 zu erkennen ist, sind die Umfangsrillen 3, 4 und 5 dabei in radialer Richtung R nach innen hin jeweils durch einen Rillengrund 15 begrenzt. Die Umfangsrillen 3, 4 und 5 sind dabei mit einer in radialer Richtung R ausgehend von der radial äußeren Oberfläche 11 der jeweils axial angrenzenden Profilblockelemente 6 bzw. 8 bis zum Rillengrund 15 gemessenen Tiefe T_{P} ausgebildet, welche der Profiltiefe des Reifens entspricht.

Wie in den Figuren dargestellt ist, sind in den Profilblockelementen 6 und 8 jeweils mehrere in Umfangsrichtung U hintereinander angeordnete und voneinander beabstandete Feineinschnitte 10 ausgebildet. In Fig.1 sind dabei in jedem dargestellten Profilblockelement 6 bzw. 8 beispielhaft drei Feineinschnitte 10 dargestellt. Dabei sind in Fig.1 die Feineinschnitte beispielhaft und zur Erläuterung in unterschiedlicher Ausführungsform 10, 10', 10", 10''', 10^{iv} und 10^{v} beispielhaft dargestellt.

Fig.1 zeigt dabei im Profilblockelement 6 ein Ausführungsbeispiel eines Feineinschnittes 10, welcher in der radial äußeren Oberfläche 11 des Profilblockelementes 6 ausgehend von der Umfangsrille 4 längs einer die Haupterstreckungsrichtung des Feineinschnittes 10 bildenden Geraden g über eine in der radial äußeren Oberfläche gemessene Erstreckungslänge b erstreckt ausgebildet ist und mit Abstand von der Umfangsrille 3 im Profilblockelement 6 endet. In Erstreckungsrichtung der Haupterstreckungsrichtung des Feineinschnittes 10 gemessen ist das Profilblockelement in der Position des Feineinschnittes 10 mit einer Erstreckungslänge L ausgebildet, wobei die Erstreckungslänge b des Feineinschnittes 10 mit 6 mm ≤ b < L ausgebildet ist. Der Feineinschnitt 10 ist längs seiner gesamten Erstreckung mit einer von der radial äußeren Oberfläche 11 des Profilblockelementes 6 in radialer Richtung R nach innen hin gemessenen Feineinschnittstiefe T₁ mit 2 mm ≤ T₁ ≤ (P_{T} - 1 mm) ausgebildet. Die Profiltiefe P_{T} ist dabei beispielsweise mit 8 mm gewählt.

Wie in Fig.1 und 2 zu erkennen ist, ist der Feineinschnitt 10 mit einem unmittelbar an die Umfangsrille 4 angrenzenden Randerstreckungsabschnitt 13 mit einer längs der Geraden g und somit der Haupterstreckungsrichtung des Feineinschnitts 10 in der radial äußeren Oberfläche 11 gemessenen Erstreckungslänge a und mit einem unmittelbar an den Randerstreckungsabschnitt 13 anschließenden Haupterstreckungsabschnitt 12 mit einer in Erstreckungsrichtung der Geraden g gemessenen Erstreckungslänge c ausgebildet mit (a + c) = b. Dabei ist die Erstreckungslänge a des Randerstreckungsabschnitts 13 mit 2mm ≤ a ≤ (1/3)b, beispielsweise mit a = (0,3)b ausgebildet. Der Feineinschnitt 10 ist - wie in Fig.2 dargestellt ist - in radialer Richtung R nach innen hin durch einen Feineinschnittsgrund 14 begrenzt und - wie in Fig.1 und 2 dargestellt ist - in Umfangsrichtung U des Fahrzeugluftreifens beiderseits des Feineinschnittsgrundes 14 jeweils durch eine Feineinschnittswand 16 bzw. 17 begrenzt, welche sich ausgehend vom Feineinschnittsgrund 14 in radialer Richtung R nach außen hin bis zur radial äußeren Oberfläche 11 erstreckt. Der Feineinschnitt 10 ist längs seiner Erstreckung in Erstreckungsrichtung der Geraden g jeweils mit einer senkrecht zur Erstreckungsrichtung in der radial äußeren Oberfläche 11 gemessenen Feineinschnittsdicke d ausgebildet, welche den Abstand zwischen den beiden Feineinschnittswänden 16 und 17 zueinander in der radial äußeren Oberfläche 11 bildet. Die Feineinschnittsdicke d ist dabei längs der Erstreckung des Feineinschnitts über den gesamten Haupterstreckungsabschnitt 12 des Feineinschnitts 10 mit einer konstanten Dicke dₘᵢₙ ausgebildet, mit 0,4 mm ≤ dₘᵢₙ ≤ 1,2 mm. Bei üblichem Winterreifeneinsatz ist dₘᵢₙ mit 0,6 mm ≤ dₘᵢₙ ≤ 0,8 mm ausgebildet. Im Randerstreckungsabschnitt 13 ist die in der radial äußeren Oberfläche 11 gemessene Feineinschnittsdicke d des Feineinschnittes 10 ausgehend von der Position des Übergangs des Haupterstreckungsabschnitts 12 zum Randerstreckungsabschnitt 13, in welche die Feineinschnittsbreite d = dₘᵢₙ ist, längs der Erstreckung des Feineinschnittes 10 bis zu dessen Einmündung in die Umfangsrille 4 mit einer längs der Erstreckung des Feineinschnittes stetig zunehmenden Feineinschnittsdicke d ausgebildet, welche in der Position der Einmündung zur Umfangsrille 4 ihren Maximalwert mit d = dmax einnimmt. Dabei ist dmax mit 2d ≤ dₘₐₓ ≤ 3d ausgebildet. Beispielsweise ist dₘₐₓ = 2,5d ausgebildet.

Im dargestellten Ausführungsbeispiel ist der Feineinschnitt 10 dabei längs seiner gesamten Erstreckung über den Haupterstreckungsabschnitt 12 und den Randerstreckungsabschnitt 13 geradlinig längs der Erstreckungsgeraden g erstreckt ausgebildet.

Wie in Figur 1 zu erkennen ist, ist der Feineinschnitt 10 im Randerstreckungsabschnitt 13 dabei durch die Veränderung der Feineinschnittsdicke d zur Umfangsrille 4 hin in der radial äußeren Oberfläche 11 sowie in den hierzu parallelen Schnittebenen trichterförmig oder trompetenförmig erweitert ausgebildet. Die Feineinschnittswände 16 und 17 sind in ihrem Verlauf in der radial äußeren Oberfläche dabei mit der Geraden g als Symmetrieachse symmetrisch zueinander verlaufend ausgebildet.

In einem nicht dargestellten Ausführungsbeispiel sind dabei alle drei Feineinschnitte des Profilblockelementes 6 wie das in Fig.1 dargestellte Ausführungsbeispiel des Feineinschnittes 10 geradlinig erstreckt und wie oben beschrieben ausgebildet.

Fig.1 zeigt im Profilblockelement 6 dargestellt zwei weitere alternative Ausbildungsformen des Feineinschnittes, welche im Profilblockelement 6 als Feineinschnitt 10' bzw. als Feineinschnitt 10" dargestellt sind.

Diese beiden dargestellten Ausführungsbeispiele des Feineinschnitts unterscheiden sich von dem als Feineinschnitt 10 dargestellten Ausführungsbeispiel im Wesentlichen dadurch, dass sie längs ihres Haupterstreckungsabschnittes 12 der Erstreckungslänge b in der radial äußeren Oberfläche wellenförmig um die die Haupterstreckungsrichtung bildende Gerade g' bzw. g'', welche die jeweilige Nulllinie der Wellenform bildet, erstreckt sind. Dabei ist der im Profilblockelement 6 als Feineinschnitt 10" dargestellte Feineinschnitt mit einer längs der Erstreckung der Geraden g" im Wesentlichen mit gleichbleibender Amplitude und Wellenlänge ausgebildeter Wellenform ausgebildet und der Feineinschnitt 10' mit einer längs der Erstreckung der Geraden g' sich in Amplitude und Wellenlänge verändernden Wellenform ausgebildet.

Die Feineinschnitte 10' und 10" sind ansonsten wie der beschriebene Feineinschnitt 10 beschrieben ausgebildet.

Die im Profilblockelement 6 dargestellten Ausführungsbeispiele der Feineinschnitte 10, 10' und 10" sind dabei mit ihrer Haupterstreckungsrichtung beispielhaft längs der Geraden g, g' bzw. g" ausgebildet, welche unter einem Neigungswinkel α = 0 zur axialen Richtung A und somit in axialer Richtung A erstreckt ausgerichtet sind. In anderer Ausführung sind die Erstreckungsgeraden g bzw. g'bzw.g'' unter einem Neigungswinkel α zur axialen Richtung A ausgebildet, mit 45° > α > 0°, beispielsweise mit α = 10°.

Ein derartiges Ausführungsbeispiel der Haupterstreckungsrichtung eines Feineinschnitts ist beispielsweise anhand Feineinschnittes 10^{v} im Profilblockelement 8 dargestellt.

Während die im Profilblockelement 6 beispielhaft dargestellten Ausführungsbeispiele der Feineinschnitte 10, 10', 10" jeweils mit Abstand zu der einen das Profilblockelement 6 hin begrenzenden Umfangsrille 3 im Profilblockelement enden, sind im Profilblockelement 8 der Profilblockreihe 2 beispielhaft Ausführungsbeispiele von Feineinschnitten 10''', 10^{iv} oder 10^{v} dargestellt, in denen der Feineinschnitt jeweils durch das gesamte Profilblockelement 8 hindurch erstreckt ist und mit seinem einen Erstreckungsende in die Umfangsrille 4 und mit seinem anderen Erstreckungsende in die ebenfalls das Profilblockelement 8 begrenzende Umfangsrille 5 mündet.

Dabei ist im Profilblockelement 8 ein Ausführungsbeispiel dargestellt, in welchem der Feineinschnitt 10''' im Wesentlichen - wie der im Profilblockelement 6 dargestellte Feineinschnitt 10 - geradlinig längs einer Erstreckungslinie g''' erstreckt ausgebildet ist und aus einem zur Umfangsrille 5 hin benachbarten Randerstreckungsabschnitt 13 der Erstreckungslänge a und aus einem an diesen Randerstreckungsabschnitt 13 angrenzenden Haupterstreckungsabschnitt 12 der Erstreckungslänge b ausgebildet ist, wobei der Feineinschnitt 10''' an seinem zur Umfangsrille 4 hin weisenden Erstreckungsende mit seinem Haupterstreckungsabschnitt 12 an die Umfangsrille 4 angrenzt. In diesem Ausführungsbeispiel ist b = L ausgebildet.

Der im Profilblockelement 8 beispielhaft dargestellte Feineinschnitt 10^{iv} ist im Wesentlichen wie der im Profilblockelement 8 beispielhaft dargestellte und oben beschriebene Feineinschnitt 10''' ausgebildet, wobei der Feineinschnitt 10^{iv} jedoch sowohl an seinem zur Umfangsrille 5 hin ausgebildeten Erstreckungsende mit einem Randerstreckungsabschnitt 13 der Erstreckungslänge a als auch an seinem zur Umfangsrille 4 hin ausgebildeten Erstreckungsende mit einem Randerstreckungsabschnitt 13 der Erstreckungslänge a und zwischen diesen beiden Randerstreckungsabschnitten 13 mit seinem Haupterstreckungsabschnitt 12 der Erstreckungslänge c ausgebildet ist. Bei diesem Ausführungsbeispiel ist (2a + c) = b und b = L ausgebildet. Bei diesem Ausführungsbeispiel ist (2a)< c ausgebildet. Wie in Fig.1 zu erkennen ist, ist der Feineinschnitt 10^{iv} dabei an beiden Erstreckungsenden jeweils zur jeweils angrenzenden Umfangsrille 4 bzw.5 hin in der radial äußeren Oberfläche 11 sowie in den hierzu parallelen Schnittebenen trichterförmig bzw. trompetenförmig erweitert ausgebildet.

In Fig.1 ist im Profilblockelement 8 ein weiteres Ausführungsbeispiel eines Feineinschnittes 10^{v} dargestellt, der im Wesentlichen der Ausbildung des bereits dargestellten und beschriebenen Feineinschnittes 10^{iv} entspricht, wobei jedoch - wie oben bereits beschrieben - der Neigungswinkel α mit α = 10° gewählt ist.

In einem nicht dargestellten Ausführungsbeispiel sind alle Feineinschnitte eines Profilblockelementes 6 oder 8 wie der in Fig.1 dargestellte Feineinschnitt 10 ausgebildet.

In einem anderen, nicht dargestellten Ausführungsbeispiel sind alle Feineinschnitte eines Profilblockelementes 6 oder 8 wie der dargestellte Feineinschnitt 10' ausgebildet.

In einem anderen, nicht dargestellten Ausführungsbeispiel sind alle Feineinschnitte eines Profilblockelementes 6 oder 8 wie der Feineinschnitt 10" ausgebildet.

In einem anderen nicht dargestellten Ausführungsbeispiel sind alle Feineinschnitte eines Profilblockelementes 6 oder 8 wie der Feineinschnitt 10''' ausgebildet.

In einem anderen nicht dargestellten Ausführungsbeispiel sind alle Feineinschnitte eines Profilblockelementes 6 oder 8 wie der Feineinschnitt 10^{iv} ausgebildet.

In einem anderen nicht dargestellten Ausführungsbeispiel sind alle Feineinschnitte eines Profilblockelementes 6 oder 8 wie der Feineinschnitt 10^{v} ausgebildet.

In einem weiteren nicht dargestellten Ausführungsbeispiel sind innerhalb eines Profilblockelementes 6 oder 8 verschiedene der oben dargestellten bzw. beschriebenen Feineinschnitte 10, 10', 10'', 10''', 10^{iv} bzw. 10^{v} ausgebildet.

In einem nicht dargestellten Ausführungsbeispiel ist in einem Profilblockelement 6 oder 8 lediglich ein einziger Feineinschnitt ausgebildet. In einem anderen nicht dargestellten Ausführungsbeispiel sind in einem Profilblockelement zwei oder mehr als drei - beispielsweise vier - Feineinschnitte ausgebildet.

In einem weiteren Ausführungsbeispiel ist eine der beiden Profilblockreihen 1 oder 2 eine Schulterprofilblockreihe eines Laufstreifenprofils.

### Bezugszeichenliste

### (Teil der Beschreibung)

- 1: Profilblockreihe
- 2: Profilblockreihe
- 3: Umfangsrille
- 4: Umfangsrille
- 5: Umfangsrille
- 6: Profilblockelement
- 7: Querrille
- 8: Profilblockelement
- 9: Querrille
- 10: Feineinschnitt
- 11: Radial äußere Oberfläche
- 12: Haupterstreckungsabschnitt
- 13: Randerstreckungsabschnitt
- 14: Feineinschnittsgrund
- 15: Rillengrund
- 16: Feineinschnittswand
- 17: Feineinschnittswand

## Patentansprüche

1. Laufstreifenprofil eines Fahrzeugreifens - insbesondere eines PKW-Fahrzeugreifens - mit durch Rillen (3,4,5) voneinander getrennten Profilelementen (6,8), die nach radial außen von einer radial äußeren Oberfläche (11) begrenzt werden, und mit Feineinschnitten (10,10',10'',10''',10 ^{Iv},10^{v}), die in der radial äußeren Oberfläche (11) in Profilelementen (6,8) ausgebildet sind und jeweils mit wenigstens einem Erstreckungsende in eine das Profilelement (6,8) begrenzende Rille (4,5) münden,
**dadurch gekennzeichnet,**
**dass** Feineinschnitte (10,10',10'',10''',10 ^{Iv},10^{v}) in Profilelementen (6,8) ausgebildet sind, die längs ihrer Erstreckung in der radial äußeren Oberfläche (11) über ihren größten Abschnitt (12) ihrer Erstreckungslänge mit einer im Wesentlichen konstanten Feineinschnittsdicke dₘᵢₙ und in einem kürzeren, zwischen dem größten Abschnitt (12) und der Rille (4,5) erstreckten Randabschnitt (13) mit einer von der Feineinschnittsdicke dₘᵢₙ in der Position des Übergangs zwischen größtem Abschnitt (12) und Randabschnitt (13) bis zur Rille (4,5) hin - insbesondere stetig - zunehmenden Feineinschnittsdicke d ausgebildet sind.

2. Laufstreifenprofil gemäß den Merkmalen von Anspruch 1,
wobei die Rille (4,5), in die der Feineinschnitt (10,10',10'',10''',10 ^{Iv},10^{v}) an seinem Randabschnitt (13) mündet, eine Umfangsrille (4,5) ist.

3. Laufstreifenprofil gemäß den Merkmalen von Anspruch 1 oder 2,
wobei der Feineinschnitt (10,10',10'',10''',10 ^{Iv},10^{v}) in der radial äußeren Oberfläche (11) mit einer Haupterstreckungsrichtung ausgebildet ist, deren Richtungskomponente in axialer Richtung A des Fahrzeugluftreifens größer ist als die in Umfangsrichtung U.

4. Laufstreifenprofil gemäß den Merkmalen von einem der vorangegangenen Ansprüche,
wobei der Feineinschnitt (10,10',10'',10''',10 ^{Iv},10^{v}) in der radial äußeren Oberfläche (11) längs der Haupterstreckungsrichtung des Feineinschnitts (10,10',10",10"',10 ^{Iv},10^{v}) gemessenen Erstreckungslänge a des Randabschnittes mit 2mm ≤ a ≤ (1/3)b ausgebildet ist, wobei b die in der radial äußeren Oberfläche (11) längs der Haupterstreckungsrichtung des Feineinschnitts (10,10',10'',10''', 10^{Iv},10^{v}) gemessene Erstreckungslänge des Feineinschnitts (10,10',10'',10''', 10^{Iv},10^{v}) ist.

5. Laufstreifenprofil gemäß den Merkmalen von einem der vorangegangenen Ansprüche,
wobei die Erstreckungslänge b des Feineinschnitts (10,10',10",10"',10 ^{Iv},10^{v}) mit 6mm ≤ b ≤ L ausgebildet ist, wobei L die in der radial äußeren Oberfläche (11) des Profilelementes (6,8) längs der Haupterstreckungsrichtung des Feineinschnitts (10,10',10",10"',10 ^{Iv},10^{v}) in der Position des Feineinschnitts (10,10',10",10"',10 ^{Iv},10^{v}) gemessene Erstreckungslänge des Profilelementes (6,8) ist.

6. Laufstreifenprofil gemäß den Merkmalen von einem der vorangegangenen Ansprüche,
wobei der Feineinschnitt (10,10',10'',10''',10 ^{Iv},10^{v}) zumindest in der radial äußeren Oberfläche (11) im Randabschnitt (13) mit einer ausgehend von der Position des Übergangs zwischen größtem Abschnitt (12) bis zur Rille (4,5) hin - insbesondere symmetrisch - trichterförmig erweitert ausgebildet ist.

7. Laufstreifenprofil gemäß den Merkmalen von einem der vorangegangenen Ansprüche,
wobei die Feineinschnittsdicke dₘᵢₙ im größten Abschnitt (12) mit 0,4mm≤dₘᵢₙ ≤1,2mm - insbesondere mit 0,6mm≤ dₘᵢₙ ≤0,8mm - ausgebildet ist.

8. Laufstreifenprofil gemäß den Merkmalen von einem der vorangegangenen Ansprüche,
wobei der Feineinschnitt (10,10',10",10"',10 ^{Iv},10^{v}) im Randabschnitt an der Einmündung in die Rille (4,5) mit ihrer maximalen Feineinschnittsdicke dₘₐₓ ausgebildet ist mit 2dₘᵢₙ ≤ dₘₐₓ ≤ 3dₘᵢₙ.

9. Laufstreifenprofil gemäß den Merkmalen von einem der vorangegangenen Ansprüche,
wobei der Feineinschnitt (10''',10 ^{Iv},10^{v}) an beiden Erstreckungsenden jeweils mit einem derartigen kürzeren, zwischen dem größten Abschnitt (12) und jeweils einer Rille (4,5) erstreckten Randabschnitt (13) mit einer von der Feineinschnittsdicke dₘᵢₙ in der Position des Übergangs zwischen größtem Abschnitt (12) und Randabschnitt (13) bis zur Rille (4,5) hin - insbesondere stetig - zunehmenden Feineinschnittsdicke d ausgebildet ist.

10. Laufstreifenprofil gemäß den Merkmalen von einem der vorangegangenen Ansprüche,
wobei das Profilelement (6,8) ein Profilblockelement einer Profilblockreihe (1,2) ist.

11. Laufstreifenprofil gemäß den Merkmalen von einem der vorangegangenen Ansprüche,
wobei das Profilelement (6,8) Teil eines Schulterprofilbandes - insbesondere einer Schulterprofilblockreihe - ist.
